# EUROPÄISCHE PATENTANMELDUNG

(11) **EP 0 814 116 A1**
(43) Veröffentlichungstag der Anmeldung: **29.12.1997**
(21) Anmeldenummer: 97107898.5
(22) Anmeldetag: 15.05.1997
(51) Int. Cl.: C08J 7/18

(54) **Hydrophile Beschichtung von Oberflächen polymerer Substrate**

(30) Priorität: 19.06.1996 DE 19624468; 03.01.1997 DE 19700079
(71) Anmelder: HÜLS AKTIENGESELLSCHAFT, 45764 Marl (DE)
(72) Erfinder: Anders, Christine, Dr., 45721 Haltern (DE); Höcker, Hartwig, Prof. Dr., 52076 Aachen (DE); Klee, Doris, Dr., 52074 Aachen (DE); Lorenz, Günter, Dr., 45772 Marl (DE)

(57) **Zusammenfassung**

Die Erfindung betrifft ein Verfahren zur Herstellung von hydrophilen Beschichtungen auf polymeren Substraten, bei dem man mindestens ein hydrophiles Vinylmonomer strahleninduziert auf einer aktivierte Substratoberfläche pfropfpolymerisiert. Die hydrophilen Vinylmonomeren haben zweckmäßig eine Löslichkeit in Wasser bei 20°C von mindestens 20 g/l. Die Aktivierung der Substratoberfläche erfolgt bevorzugt durch UV-Strahlen im Wellenlängenbereich von 100 nm bis 400 nm oder durch Hochfrequenz- oder Mikrowellenplasma. Die Pfropfpolymerisation wird vorteilhaft durch UV-Strahlen im Wellenlängenbereich von 260 nm bis 500 nm induziert. Die hydrophil beschichteten Substrate eignen sich u.a. zur Verwendung für technische, medizinische oder biotechnische Zwecke.

## Beschreibung

Die Erfindung betrifft ein Verfahren zur Herstellung von hydrophilen Beschichtungen auf polymeren Substraten, die an die Oberflächen der Substrate chemisch gebunden sind. Die Erfindung betrifft weiterhin Gegenstände mit derart beschichteten Oberflächen sowie deren Verwendung für technische, medizinische oder biotechnische Zwecke.

Polymere (oder Kunststoffe) mit einer durch eine besondere Behandlung erzeugten hydrophilen Oberfläche besitzen gegenüber den unbehandelten Polymeren mit zumeist hydrophober Oberfläche, je nach der beabsichtigten Verwendung, verschiedene Vorteile. Die höhere Oberflächenenergie bewirkt eine bessere Benetzbarkeit mit Wasser, wässerigen Lösungen oder Dispersionen sowie mit anderen Flüssigkeiten mit hoher Oberflächenspannung. Eine verbesserte Benetzbarkeit durch nachträgliche Hydrophilierung ist z.B. nützlich oder gar erforderlich, wenn eine Kunststoffoberfläche mit polaren Farbstoffen gefärbt oder bedruckt werden soll oder wenn Kunststoffoberflächen mit Hilfe eines polaren Klebers miteinander verbunden werden sollen. Auch Fasern und textile Gewebe oder Vliese aus Polymeren bedürfen zum Schlichten, Appretieren und Färben einer guten Benetzbarkeit.

Weiterhin ist die Hydrophilierung von Bedeutung bei polymeren Werkstoffen, die in wässerigen Systemen verwendet werden. So müssen technische Membranen. z.B. für die Meerwasserentsalzung, einwandfrei benetzbar sein, um ihre Trennwirkung voll entfalten zu können. Die Oberflächen von Kunststoffrohren oder chemischen Apparaten müssen gut benetzbar sein, wenn es auf guten Wärmeaustausch mit der Umgebung und/oder, bei Rohren, auf guten Durchfluß ankommt. Eine gute Benetzbarkeit ist auch für durchströmte Schüttungen von Kunststoffteilchen, z.B. Ionenaustauschharzen, sowie von porösen Schichten, z.B. z.B. Dialysemembranen, von Vorteil. Unerwünscht, weil funktionshemmend sind auch Gasblasen, die sich auf den flüssigkeitsseitigen Oberflächen von Kunststoffrohren, -schläuchen oder -behältern absetzen, weil die Oberflächen für die Flüssigkeit nicht hinreichend benetzbar sind.

Unverzichtbar sind hydrophilierte Kunststoffoberflächen bei vielen medizinischen oder biotechnischen Anwendungen, weil sie, im Gegensatz zu den von Natur aus meist hydrophoben Standardkunststoffen, mit Blut, Gewebeflüssigkeiten oder anderen Flüssigkeiten mit empfindlichen biologischen Inhaltsstoffen sehr gut verträglich sind. Beispiele für solche Anwendungen sind Blutplasmabehälter, Dialyseschläuche, Katheter, Kontaktlinsen usw.

Die Hydrophilierung von polymeren Substraten kann durch eine ein- oder mehrstufige physikalische und/oder chemische Behandlung bewirkt werden. Alle bekannten Behandlungsverfahren zielen darauf ab, auf der Oberfläche des polymeren Substrats hydrophile Gruppen, wie Hydroxyl-. Carboxyl- oder auch Ketogruppen, zu schaffen. Dies, kann durch Verfahren erreicht werden, bei denen die hydrophilen Gruppen aus peripheren Schichten des Polymeren selbst entstehen. Alternativ oder zusätzlich können Schichten aus hydrophilen Verbindungen auf die ggf. vorbehandelte Oberfläche aufgebracht und, wenn es sich um Vinylmonomere handelt, polymerisiert werden.

Zu den einstufigen Behandlungsverfahren, die die erwünschten hydrophilen Gruppen aus dem Polymer selbst erzeugen, zählen Beflammungstechniken (D.Briggs et al,, J.Mater.Sci, **14**, 1979, 1344) sowie Korona-Behandlungen (J.M.Lane et al., Progress in Organic Coatings **21**, 1993, 269-284). Die dadurch erzeugte Hydrophilie ist jedoch häufig instabil und baut sich innerhalb von Stunden oder Tagen ab. Auch Plasmaprozesse sind bekannt geworden, die die hydrophilen Gruppen in einer Stufe aus dem Polymeren selbst erzeugen. Nach W,Möhl, Kunststoffe **81** (1981). 7 werden Polyethylen oder Polypropylen mit Niederdruckplasma behandelt und eignen sich dann besser für die Herstellung von Verbundmaterialien. Ähnlich beschreiben J.F.Friedrich et al. in GAK 6/94, Jahrgang 47, 382-388 eine Plasmavorbehandlung von Polymeren, z.B. Polyolefinen, wodurch sie besser mit Polyurethanen verklebt werden können, Plasmaprozesse ergeben befriedigende Ergebnisse, wenn man die Substrate bald nach der Behandlung verklebt. Eine Stabilisierung der hydrophilen Eigenschaften ist durch weitere Umsetzung, z.B. mit hydrophilen Monomeren, möglich. Dadurch werden chemisch gebundene hydrophile, gegebenenfalls sperrige Gruppen auf der Oberfläche erzeugt, die nicht in das Innere wandern können. Plasmaprozesse führen zudem häufig zu Erosionen, die die Oberfläche rauh machen. Das ist häufig unerwünscht, z.B. wenn die Hydrophilierung den Reibungskoeffizienten bei Kontakt mit Wasser herabsetzen soll. Eine Aufrauhung der Oberfläche verschlechtert die tribologischen Eigenschaften und wirkt diesem Ziel entgegen.

Durch eine einstufige oxidative Behandlung mit Chrom(VI)-säure entstehen an der Oberfläche von Polypropylen aus den oberflächennahen Schichten hydrophile Gruppen (Kang-Wook Lee et al. in Macromolecules **1988**, 21, 309-313). Chrom(VI)-verbindungen werden in der Technik nach Möglichkeit vermieden, weil sie cancerogen sind und nicht in die Umwelt gelangen dürfen.

Bei einer Reihe weiterer bekannter Verfahren werden die hydrophilen Gruppen durch Beschichtung mit einem hydrophilem Beschichtungsmittel eingeführt. Dabei kann man Verfahren mit und ohne Vorbehandlung der Oberflächen des polymeren Substrats, z.B. mittels Laser, Plasma usw., unterscheiden (wobei die bei fast allen einschlägigen Verfahren vorgesehene anfängliche Reinigung der Oberfläche mit einem Lösungsmittel nicht als Vorbehandlung gewertet wird).

Ein Beschichtungsverfahren ohne Vorbehandlung des Substrats ist die Pfropfung von Polypropylen mit 2-Hydroxyethylmethacrylat (HEMA), die von S.R.Shukla et al. in J.Appl.Polym. Sci., Vol. **51**. 1567-74 (1994) beschrieben wurde. Wenn dabei die Polymerisation mit UV-Strahlen initiiert wird, ist die Mitverwendung von Methanol als Lösungsmittel erforderlich, das toxikologisch nicht unbedenklich ist und das Abwasser belastet. Wenn man die Polymerisation durch Uranylnitrat oder Cerammoniumnitrat auslöst, muß verhindert werden, daß die Schwermetalle Uran und Cerium in das Abwasser gelangen.

Zu den Beschichtungsverfahren ohne Vorbehandlung des Substrats zählt auch die Arbeitsweise nach B.D.Ratner et al., US-A-5 002 794, bei der man hydrophile Stoffe, wie Polyethylenglykol oder 2-Hydroxyethylmethacrylat (HEMA), mittels Plasma auf metallischen, silikatischen oder Kunststoffoberflächen abscheidet. Hydrophile Monomere, wie HEMA, polymerisieren dabei spontan unter dem Einfluß freier Radikale, die durch das Plasma entstehen. H.Mirzadeh et al., Biomaterials, **1995** Vol.4 Nr.8, 641-648. erwähnen die Pfropfung von Acrylamid oder HEMA auf ein spezielles Polymer, nämlich vulkanisierten Ethylen-Propylen-Kautschuk, mit Hilfe eines gepulsten CO₂-Lasers. Poly(etherimide) werden nach S.Edge et al., Polymer Bulletin **27** (1992). 441-445. ohne Vorbehandlung der Oberfläche durch photochemische Pfropfung von HEMA aus der Dampfphase hydrophiliert. Als Strahlungsquelle wird dazu eine Quecksilberdampflampe benutzt. Weiterhin läßt sich nach B.Jansen et al., J.Polymer.Sci., Polymer Symposium **66** (1979), 465-473, ein spezielles Polyurethan, Tuftan 410 von B.F. Goodrich, mit HEMA unter Bestrahlung mit Gammastrahlen von ⁶⁰Kobalt pfropfen. Ein Nachteil dieses Verfahrens sind die aufwendigen Strahlenschutzmaßnahmen, die es erfordert.

Es mag dahingestellt bleiben, ob bei den im vorhergehenden Absatz genannten Verfahren die Strahlen bzw. das Plasma nur die Polymerisation der Monomeren bewirken oder gleichzeitig auch die Oberfläche des polymeren Substrats aktivieren. Letzteres ist vermutlich der Fall, denn einerseits ist, wie zuvor erwähnt, die hydrophilierende Wirkung des Plasmas sowie der Korona-Behandlungen auf Kunststoffoberflächen bekannt. Auf jeden Fall sind die Strahlen bzw. ist das Plasma so energiereich, daß die hydrophilen Monomeren bzw. das Polymerisat daraus angegriffen werden. H. Yasuda spricht dementsprechend in J.Polym.Sci.: Macromolecular Review. Vol. **16**, 199-293 (1981) von der undefinierten und nicht kontrollierbaren Chemie der Plasma-Polymerisation. Daß dabei Moleküle zerstört werden, läßt sich bei der Oberflächenbeschichtung mit HEMA dadurch nachweisen. daß die Analyse durch ESCA (Electronic Spectroscopy for Chemical Analysis) nach H.Morra et al,, J.Biomed.Mat.Res., **29**, 39-45 1995. geringere Werte für Sauerstoff ergibt als sie nach der Zusammensetzung von HEMA zu erwarten wären und als bei in üblicher Weise, d.h. radikalisch polymerisiertem HEMA, tatsächlich auch gefunden werden. Dies mag für manche Anwendungen unerheblich sein. Bei medizinischen oder biotechnischen Anwendungen ist jedoch eine Schicht aus intaktem HEMA sehr erwünscht, weil, wie bereits erwähnt, solche Schichten mit den empfindlichen Inhaltsstoffen der dort gehandhabten Flüssigkeiten sehr gut verträglich sind.

Es sind aber auch Verfahren bekannt geworden, bei denen der Beschichtung mit polymerisierbaren Monomeren eine aktivierende, die Kunststoffoberfläche modifizierende Strahlenbehandlung vorausgeht, Aktivierung und Beschichtung der Oberfläche werden also zeitlich getrennt. P.Gatenholm et al., Polym.Mater.Sci, **1992**, 66. 445-6, beschreiben die Hydrophilierung von Filmen sowie mikroporösen Membranen aus Polypropylen durch Behandlung mit Ozon und nachfolgende Beschichtung mit HEMA, dessen Polymerisation durch Zerfall der auf der Oberfläche entstandenen Hydroperoxid-Gruppen ausgelöst wird. Nachteilig ist bei diesem Verfahren, daß Ozon in höherer Konzentration das Polymere zerstört. Schließlich beschreiben H.Thelen et al. in Fresenius, J.Anal.Chem. **1995**, 353:290-296, eine hydrophilierende Behandlung von Polyethersulfonen, bei der das Substrat zunächst mit Stickstoffplasma in Anwesenheit von geringen Mengen an Sauerstoff behandelt und dann mit HEMA beschichtet wird. Das Verfahren ist aufwendig, weil die Polyethersulfon-Membran vor der Beschichtung extrahiert werden und, wie auch bei dem Verfahren nach Gatenholm et al., aus der HEMA-Lösung Sauerstoff, der die Polymerisation inhibiert, sorgfältig ausgeschlossen werden muß. Außerdem ist bei beiden genannten Verfahren die Konzentration der Hydroperoxidgruppen auf der Oberfläche und damit die Pfropfdichte schwierig zu steuern.

Es wurde nun überraschend gefunden, daß sich hydrophile Beschichtungen auf polymeren Substraten vorteilhaft herstellen lassen, wenn man mindestens ein hydrophiles Vinylmonomer strahleninduziert auf einer aktivierten Substratoberfläche propfpolymerisiert.

Das Verfahren liefert in vergleichsweise einfacher und gut reproduzierbarer Weise glatte, nach der Analyse mittels Rasterelektronenmikroskop geschlossene hydrophile Schichten aus dem polymerisierten hydrophilen Vinylmonomeren, die sich nach ESCA nicht von Schichten unterscheiden, die mit Radikalbildnern als Initiatoren aus demselben Vinylmonomeren hergestellt wurden. Der hydrophile Charakter der Oberflächen, erkennbar am kleineren Kontaktwinkel, wird durch das Verfahren nach der Erfindung erheblich gesteigert bzw. überhaupt erst geschaffen. Das Verfahren kann mit einer großen Zahl unterschiedlicher polymerer Substrate und verschiedener hydrophiler Vinylmonomeren durchgeführt werden. Die hydrophilen Polymerschichten sind kovalent mit dem Substrat verbunden, lassen sich also nicht selektiv mit Lösungsmitteln von dem Substrat ablösen und sind daher sehr dauerhaft. Das Verfahren arbeitet ausschließlich mit wässerigen System, so daß das Abwasser nicht mit organischen Lösungsmitteln und/oder Schwermetallen belastet wird. Die erforderlichen Strahlungsquellen für UV-Strahlung mit den angegebenen Wellenlängen sind im Handel erhältlich. Die nach dem Verfahren der Erfindung beschichteten polymeren Substrate eignen sich hervorragend zur Verwendung für technische, medizinische und biotechnische Zwecke.

### 1. Die polymeren Substrate

Zu den polymeren Substraten, deren Oberflachen nach dem Verfahren der Erfindung hydrophil beschichtet werden können, zählen Homo- und Copolymere, beispielsweise Polyolefine, wie Polyethylen, Polypropylen, Polyisobutylen, Polybutadien, Polyisopren, natürliche Kautschuke und Polyethylen-co-propylen; halogenhaltige Polymere, wie Polyvinylchlorid, Polyvinylidenchlorid, Polychloropren, Polytetrafluorethylen und Polyvinylidenfluorid: Polymere und Copolymere aus vinylaromatischen Monomeren, wie Polystyrol, Polyvinyltoluol, Polystyrol-co-vinyltoluol, Polystyrol-co-acrylnitril, Polystyrol-co-butadien-co-acrylnitril: Polykondensate, beispielsweise Polyester, wie Polyethylenterephthalat und Polybutylenterephthalat: Polyamide, wie Polyoaprolactam, Polylaurinlactam und das Polykondensat aus Adipinsäure und Hexamethylendiamin; Polyetherblockamide, z.B. aus Laurinlactam und Polyethylenglykol mit durchschnittlich 8, 12 oder 16 Ethylenoxygruppen: weiterhin Polyurethane, Polyether, Polycarbonate, Polysulfone, Polyetherketone. Polyesteramide und -imide, Polyacrylnitril, Polyacrylate und -methacrylate. Auch Blends aus zwei oder mehr Polymeren oder Copolymeren lassen sich nach dem Verfahren hydrophilieren, ebenso wie Kombinationen aus verschiedenen Kunststoffen, die durch Verkleben, Verschweißen oder Schmelzen miteinander verbunden sind, einschließlich der Übergangsbereiche.

### 2. Die hydrophilen Vinylmomeren

Geeignete hydrophile Vinylmonomere enthalten mindestens eine olefinische Doppelbindung sowie mindestens eine hydrophile Gruppe. Die olefinischen Doppelbindungen können in verschiedenartigen funktionalen Resten vorliegen, beispielsweise in Alkenylresten, wie Vinyl- oder Allylresten, oder in Resten, die sich von ungesättigten Carbonsäuren oder deren Derivaten ableiten, wie Acrylsäure, Methacrylsäure, den Amiden dieser Carbonsäuren oder Maleinsäure. Auch hinsichtlich der hydrophilen Gruppen herrscht große Mannigfaltigkeit. Von den geeigneten hydrophilen Gruppen seien beispielsweise genannt: Hydroxylgruppen, Ethergruppen, Acyloxygruppen, Carboxylgruppen, Carbonsäureestergruppen, Carbonsäureamidgruppen, Carboalkoxygruppen und Nitrilgruppen; 1,2-Epoxidgruppen: Schwefelsäureester, Sulfonsäure, Sulfinsäure-, Phosphorsäure-, Phosphonsäure- und Phosphinsäuregruppen einschließlich ihrer entsprechenden Salze und Ester; primäre. sekundäre und tertiäre Aminogruppen; Acylaminogruppen, die offenkettig oder in einen Ring eingebaut sein können; Polyalkylenoxidgruppen, wie Polyethylenoxidgruppen und Polypropylenoxidgruppen. mit oder ohne endständige Hydroxylgruppe: Polyester-, Polyesteramid- und Polyetheresteramidgruppen: sowie Reste von olefinisch funktionalisierten Zuckern. Natürlich kommt es für die Hydrophilität eines Monomeren auf die Balance zwischen hydrophilen und hydrophoben Anteilen im Molekül des Monomeren an. Für die Erfindung geeignete Monomere sind bei 20°C in Wasser zu mindestens 1 Gewichtsprozent, vorteilhaft zu mindestens 10 Gewichtsprozent und insbesondere zu mindestens 40 Gewichtsprozent löslich, jeweils bezogen auf die gesamte Lösung.

Die für die Erfindung verwendeten hydrophilen Vinylmonomeren enthalten vorzugsweise eine olefinische Doppelbindung und eine hydrophile Gruppe. Sie können aber auch mehrere olefinische Doppelbindungen und/oder hydrophile Gruppen aufweisen. So sind z.B. kettenförmige Polyalkylenoxide mit zwei endständigen Vinyl-, Allyl-, Acryloxy- oder Methacryloxy-Gruppen gut geeignet.

Von den geeigneten hydrophilen Vinylmonomeren seien beispielsweise genannt: Acrylsäure und deren Derivate, z.B. Acrylamid, N,N,-Dimethylacrylamid, Acrylnitril, Methylacrylat, 2-Hydroxyethylacrylat, 2-Hydroxypropylacrylat, 2-Methoxyethylacrylat; 2-Ethoxyethylacrylat, 4-Hydroxybutylacrylat und 1,4-Butandioldiacrylat, sowie Methacrylsäure und deren entsprechende Derivate; Carbonsäurevinylderivate, wie Vinylacetat, N-Vinylacetamid und N-Vinylpyrrolidon; Vinylsulfonsäuren und deren Alkalisalze, wie Natriumvinylsulfonat; Alkenylarylsulfonsäuren und deren Alkalisalze, wie Styrolsulfonsäure und Natriumstyrolsulfonat, Vinylether, wie Vinylmethylether, Vinylethylether, Vinylglycidylether, Diethylenglykoldivinylether und Vinyl-n-butylether; Vinylketone, wie Vinylmethylketon, Vinylethylketon und Vinyl-n-propylketon; Vinylamine, wie N-Vinylpyrrolidin; Polyalkylenverbindungen mit endständigen Allyl-, Vinyl-, Acryl- oder Methacrylgruppen, wie Ethoxytetraethoxyethylacrylat oder -methacrylat, n-Propoxydodecaethylenoxyethylvinylether, Polyethylenglykolmonoacrylate mit Molgewichten von 600 oder 1.200 Poly(ethylen/propylen)glykolmonomethacrylate mit Molgewichten von 400 und 800 sowie Allyloxyoctapropylenoxyethanol; Zuckerderivate, wie vinylsubstituierte Arabinose oder acryloylierte Hydroxypropylzellulose; und funktionalisierte Polyalkylenglykole, wie Triethylenglykoldiacrylat oder Tetraethylenglykoldiallylether

Die Monomeren können jeweils einzeln oder aber als dem jeweiligen Verwendungszweck angepaßtes Gemisch verwendet werden, Man erhält dementsprechend auf dem Substrat eine Beschichtung aus einem Homo- oder einem Copolymerisat. Die Monomeren werden im allgemeinen als 1 bis 40-, vorteilhaft als 5 bis 20-gewichtsprozentige Lösungen eingesetzt. Das Lösungsmittel ist zweckmäßig Wasser. Die Lösungen brauchen keine der bekannten Polymerisationsinitiatoren oder andere für Polymerisationsverfahren bekannte Zusatzstoffe zu enthalten,

### 3. Die Aktivierung der polymeren Substrate

Die Oberflächen der Substrate können erfindungsgemäß nach einer Reihe von Methoden aktiviert werden. Zweckmäßig werden sie zuvor in bekannter Weise mittels eines Lösungsmittels von anhaftenden Ölen. Fetten oder anderen Verunreinigungen befreit.
3.1 Die Aktivierung von Standardpolymeren ohne UV-strahlungssensitive Gruppen kann vorteilhaft durch UV-Strahlung, z.B. im Wellenlängenbereich von 100 bis 400 nm, vorzugsweise von 125 bis 310 nm erfolgen. Besonders gute Ergebnisse wurden mit weitgehend monochromatischer, kontinuierlicher Strahlung erzielt, wie sie z.B. von Excimer-UV-Strahlern (Fa. Heraeus, Kleinostheim, BR Deutschland) beispielsweise mit F₂, Xe₂, ArF, XeCl, KrCl und KrF als Lampenmedium, erzeugt wird. Aber auch andere Strahlungsquellen, wie Quecksilberdampflampen mit breitem Strahlungsspektrum und Strahlungsanteilen im sichtbaren Bereich, sind geeignet, sofern sie erhebliche Strahlungsanteile in den genannten Wellenlängenbereichen emittieren. Es hat sich gezeigt, daß die Anwesenheit kleiner Mengen an Sauerstoff vorteilhaft ist. Die bevorzugten Sauerstoffpartialdrücke liegen zwischen 2x10⁻⁵ und 2x10⁻² bar. Man arbeitet beispielsweise in einem Vakuum von 10⁻⁴ bis 10⁻¹ bar oder unter Verwendung eines Inertgases, wie Helium, Stickstoff oder Argon, mit einem Sauerstoffgehalt von 0,02 bis 20 Promille. Die optimale Bestrahlungsdauer hängt von dem polymeren Substrat, der Zusammensetzung des umgebenden Gasmediums, der Wellenlänge der Strahlen sowie der Leistung der Strahlerquelle ab und läßt sich durch orientierende Vorversuche unschwer ermitteln. Im allgemeinen bestrahlt man die Substrate 0,1 Sekunde bis 20 Minuten lang, insbesondere 1 Sekunde bis 10 Minuten. Bei diesen kurzen Bestrahlungszeiten erwärmt sich das polymere Substrat nur in geringem Maße, und es treten selbst bei Strahlen mit Wellenlängen am harten Ende des genannten weiteren Bereichs keine unerwünschten Nebenreaktionen auf, die zu Schäden an den exponierten Oberflächen führen könnten.
3.2 Die Aktivierung kann erfindungsgemäß auch durch ein Hochfrequenz- oder Mikrowellenplasma (Hexagon, Fa. Technics Plasma, 85551 Kirchheim, Deutschland) in Luft, Stickstoff- oder Argonatmosphäre erreicht werden. Die Expositionszeiten betragen im allgemeinen 30 Sekunden bis 30 Minuten, vorzugsweise 2 bis 10 Minuten. Der Energieeintrag liegt bei Laborgeräten zwischen 100 und 500W, vorzugsweise zwischen 200 und 300W.
3.3 Weiterhin lassen sich auch Korona-Geräte (Fa. SOFTAL, Hamburg, Deutschland) zur Aktivierung verwenden. Die Expositionszeiten betragen in diesem Falle in der Regel 1 Sekunde bis 10 Minuten, vorzugsweise 1 bis 60 Sekunden.
3.4 Die Aktivierung durch Elektronen- oder gamma-Strahlen (z.B. aus einer Kobalt-60-Quelle) ermöglicht kurze Expositionszeiten, die im allgemeinen 0,1 bis 60 Sekunden betragen.
3.5 Beflammungen von Oberflächen führen ebenfalls zu deren Aktivierung. Geeignete Geräte, insbesondere solche mit einer Barriere-Flammenfront, lassen sich auf einfache Weise bauen oder beispielsweise beziehen von der Fa. ARCOTEC, 71297 Mönsheim, Deutschland. Sie können mit Kohlenwasserstoffen oder Wasserstoff als Brenngas betrieben werden. In jedem Fall muß eine schädliche Überhitzung des Substrats vermieden werden, was durch innigen Kontakt mit einer gekühlten Metallfläche auf der von der Beflammungsseite abgewandten Substratoberfläche leicht erreicht wird. Die Aktivierung durch Beflammung ist dementsprechend auf verhältnismäßig dünne, flächige Substrate beschränkt. Die Expositionszeiten belaufen sich im allgemeinen aus 0,1 Sekunde bis 1 Minute, vorzugsweise o,5 bis 2 Sekunden, wobei es sich ausnahmslos um nicht leichtende Flammen handelt und die Abstände der Substratoberflächen zur äußeren Flammenfront 0,2 bis 5 cm, vorzugsweise 0,5 bis 2 cm betragen.
3.6 Weiterhin lassen sich Substratoberflächen auch durch Behandlung mit starken Säuren oder Basen aktivieren. Von den geeigneten starken Säuren seien Schwefelsäure, Salpetersäure und Salzsäure genannt. Man kann z.B. Polyamide 5 Sekunden bis 1 Minute mit konzentrierter Schwefelsäure bei Raumtemperatur behandeln. Als starke Basen eignen sich besonders Alkalimetallhydroxide in Wasser oder einem organischen Lösemittel. So kann man z.B. verdünnte Natronlauge 1 bis 60 Minuten bei 20 bis 80°C auf die Substrate einwirken lassen. Alternativ können z.B. Polyamide aktiviert werden, indem man 2 %iges KOH in Tetrahydrofuran 1 Minute bis 30 Minuten auf die Substratoberfläche einwirken läßt.
3,7 Schließlich können schon bei der Herstellung der Substratpolymeren Monomere mit UV-strahlungssensitiven Gruppen einpolymerisiert werden. Als solche eignen sich u.a. Furyl- oder Cinnamoylderivate, die z.B. in Mengen von 3 bis 15 mol% angewandt werden können. Gut geeignete Monomere dieser Art sind Cinnamoylethylacrylat und -methacrylat.

In manchen Fällen, z.B. bei hochhydrophoben Polymeren, kann es empfehlenswert sein, die Substratoberfläche durch eine Kombination aus zwei oder mehr der genannten Methoden zu aktivieren. Die bevorzugte Aktivierungsmethode ist die mit UV-Strahlung gemäß 3.1.

### 4. Die Beschichtung durch Pfropf(co)polymerisation

Wenn die Substrate nach einer der unter 3.1 bis 3.6 beschriebenen Methoden aktiviert wurden, werden die aktivierten Oberflächen zweckmäßig 1 bis 20 Minuten, vorzugsweise 1 bis 5 Minuten der Einwirkung von Sauerstoff, z.B. in Form von Luft, ausgesetzt.

Anschließend werden die (gegebenenfalls auch gemäß 3.7) aktivierten Oberflächen nach bekannten Methoden, wie Tauchen, Sprühen oder Streichen, mit Lösungen des oder der erfindungsgemäß zu verwendenden Vinylmonomeren beschichtet. Als Lösemittel haben sich Wasser-Ethanol-Gemische bewährt, doch sind auch andere Lösemittel verwendbar, sofern sie ein ausreichendes Lösevermögen für das Monomer oder die Monomeren besitzen und die Substratoberfläche gut benetzen. Je nach Löslichkeit der Monomeren und gewünschter Schichtdicke der fertigen Beschichtung können die Konzentrationen der Monomeren in der Lösung 1 bis 40 Gew.-% betragen. Lösungen mit Monomerengehalten von 5 bis 20 Gew.-%, beispielsweise von etwa 10 Gew.-%, haben sich in der Praxis bewährt 'und ergeben im allgemeinen in einem Durchgang zusammenhängende, die Substratoberfläche bedeckende Beschichtungen mit Schichtdicken, die mehr als 0,1 µm betragen können.

Nach dem Verdampfen des Lösemittels oder während des Verdampfens wird die Polymerisation oder Copolymerisation des oder der auf die aktivierte Oberfläche aufgebrachten Monomeren zweckmäßig durch Strahlen im kurzwelligen Segment des sichtbaren Bereiches oder im langwelligen UV-Bereich der elektromagnetischen Strahlung induziert. Gut geeignet ist z.B. die Strahlung mit Wellenlängen von 250 bis 500 nm, vorzugsweise von 290 bis 320 nm. Strahlen im genannten Wellenlängenbereich sind relativ weich, selektiv bezüglich der Polymerisation und greifen das polymere Substrat nicht an. Wie bei der Substrataktivierung ist es auch hier vorteilhaft, mit einer Strahlenquelle zu arbeiten, die weitgehend monochromatische, kontinuierliche Strahlen emittiert. Besonders geeignet sind wiederum Excimer-UV-Strahler mit kontinuierlicher Strahlung, z.B. mit XeCl oder XeF als Strahlermedium. Die erforderliche Intensität der Strahlen und die Dauer der Einwirkung hängen von den jeweiligen hydrophilen Monomeren ab und lassen sich durch orientierende Versuche ohne weiteres ermitteln. Im Prinzip sind auch hier Quecksilberdampflampen brauchbar, sofern sie erhebliche Strahlungsanteile in den genannten Wellenlängenbereichen emittieren. Die Expositionszeiten betragen in jedem Fall im allgemeinen 10 Sekunden bis 30 Minuten, vorzugsweise 2 bis 15 Minuten.

Bisweilen ist es zweckmäßig, die beschriebenen Schritte einschließlich der Aktivierung zu wiederholen, um mittels einer solchen Mehrschichtentechnik eine hermetisch geschlossene und/oder dickere Beschichtung zu erzeugen. Alternativ ist es auch möglich, das aktivierte Substrat, gegebenenfalls nach der beschriebenen Sauerstoffbehandlung. in die Lösung des oder der erfindungsgemäß zu verwendenden Vinylmonomeren einzutauchen und im getauchten Zustand zu bestrahlen. Durch orientierende Versuche läßt sich unschwer feststellen, bei welchen Bestrahlungszeiten mit einer gegebenen Strahlungsquelle und bei welchen, gegebenenfalls längeren Kontaktzeiten von Substrat und Tauchbad die gewünschte Schichtdicke erreicht ist.

Gegenstände mit einer nach dem Verfahren der Erfindung hydrophil beschichteten Oberfläche eignen sich zur Verwendung für technische, medizinische oder biotechnische Zwecke, wie sie zuvor erwähnt wurden. Wenn es bei der Verwendung der nach dem Verfahren der Erfindung hydrophil beschichteten Substrate auf Monomerenfreiheit ankommt, ist es zweckmäßig, die Restmonomeren aus der polymeren hydrophilen Beschichtung zu extrahieren. Dies kann mit Wasser und anschließend mit einem organischen Lösungsmittel geschehen. z.B. mit Kohlenwasserstoffen, wie Hexan oder Cyclohexan, und/oder mit einem Alkanol mit 1 bis 4 Kohlenstoffatomen, wie Ethanol und n-Propanol. Gut geeignet für den zweiten Extraktionsschritt ist z.B. ein Gemisch aus n-Hexan und Ethanol mit 65 bis 85 Volumenprozent n-Hexan.

Ein Maß für die hydrophilierende Wirkung des Verfahrens der Erfindung ist die Veränderung des Kontaktwinkels eines Wassertropfens oder einer Luftblase. Beispielsweise wird unterhalb der von Wasser umgebenen Probe eine Luftblase erzeugt, die zur Probe aufsteigt und diese in Abhängigkeit von deren Hydrophilie benetzt. Ein solches Verfahren wurde von R.J.Good et al., Techniques of Measuring Contact Angles in Surface and Colloid Science (Hrsg. R.J.Good), Vol. 11, Plenum Press New York. N.Y., 1979 beschrieben. In den folgenden Beispielen wurden die Kontaktwinkel nach dieser Vorschrift bei 25°C gemessen. Diese Beispiele sollen die Erfindung weiter erläutern. nicht aber deren Umfang begrenzen, wie er in den Patentansprüchen definiert ist.

### Beispiel 1

Ein Probestück einer 100 µm starke Polyamidfolie (Polyamid 12; L2101 F der Hüls AG) mit den Maßen 5 x 8 cm wurde unter vermindertem Druck von 1 mbar 5 Minuten einer Excimerstrahlung von 172 nm Wellenlänge ausgesetzt. Die Strahlung stammte von einem Excimer-UV-Strahler mit Xe₂ als Lasergas und einer Leistung von 1.7 kW, der Abstand der Probe von der Strahlungsquelle betrug 4 cm.

Die so aktivierte Probe wurde 3 Minuten an der Luft aufbewahrt, in eine 10 gewichtsprozentige wässerige Lösung von 2-Hydroxyethylmethacrylat getaucht und im getauchten Zustand 5 Minuten mit Excimerstrahlung von 308 nm Wellenlänge bestrahlt. Zur Entfernung von Restmonomeren wird das Probestück dreimal jeweils für 2 Stunden in Wasser von 50°C gelegt und anschließend 24 Stunden in einem Soxhleth-Apparat mit n-Hexan und Ethanol (Volumenverhältnis 79:21) extrahiert.

Die Ergebnisse des Beispiels, wie auch die der folgenden Beispiele 2 bis 6, sind in der nachfolgenden Tabelle 1 zusammengefaßt.

### Beispiel 2

Es wurde verfahren, wie in Beispiel 1 beschrieben, außer daß 4-Hydroxybutylacrylat als hydrophiles Monomer verwendet wurde.

### Beispiel 3

Es wurde verfahren, wie in Beispiel 1 beschrieben, außer daß Natriumvinylsulfonat in 25-gewichtsprozentiger wässeriger Lösung als hydrophiles Monomer verwendet wurde.

### Beispiel 4

Eine Probestück einer Polyethylenfolie von 200 µm Stärke (Typ A 4042 der Vestolan GmbH) wurde 1 Minute mit Excimerstrahlen einer Wellenlänge von 172 nm bestrahlt` wie in Beispiel 1 beschrieben, und nach ebenfalls 3 Minuten an der Luft in ein 20-gewichtsprozentige wässerige Lösung von N-Vinylpyrrolidon getaucht. Das getauchte Probestück wurde dann 6 Minuten mit UV-Excimerstrahlen einer Wellenlänge von 351 nm bestrahlt, wodurch eine Polymerenschicht auf dem Substrat erzeugt wurde.

### Beispiel 5

Eine Polysulfonfolie von 150 µm Stärke wurde hergestellt, indem Polysulfon (Ultrason^{(R)} E 200. BASF AG) in Dimethylsulfoxid gelöst und die Lösung in Petrischalen gegossen wurde, wo das Lösungsmittel verdampfte. Diese Folie wurde in eine 20-gewichtsprozentige Lösung von Hydroxypropylacrylat getaucht und im getauchten Zustand 5 Minuten mit UV-Excimerstrahlen einer Wellenlänge von 351 nm bestrahlt, wodurch eine Polymerenschicht auf dem Substrat erzeugt wurde.

### Beispiel 6

Polyvinylchlorid (VESTOLIT^{(R)} E 7012, Vestolit GmbH wurde in Tetrahydrofuran gelöst und die Lösung in eine Petrischale gegossen. wo das Lösungsmittel verdampfte und eine 200 µm starke Folie verblieb. Man verfuhr weiter wie in Beispiel 4, verwendete jedoch Acrylamid in Form einer 20-gewichtsprozentigen wässerigen Lösung als hydrophiles Monomer.

**Tabelle 1**

| Bsp. | Polymer | Oberflächenzusammensetzung (durch ESCA) [Atom-%] | | | | | | Kontaktwinkel [°] |
|---|---|---|---|---|---|---|---|---|
| | | C | O | S | Na | Cl | N | |
| 1 | Polyamid 12 unbehandelt | 86,9 | 6,9 | - | - | - | 6,2 | 34 |
| | beschichtet | 67,4 | 32,6 | - | - | - | - | 17 |
| 2 | Polyamid 12 beschichtet | 72,3 | 27,7 | - | - | - | - | 22 |
| 3 | Polyamid 12 beschichtet | 37,4 | 40,0 | 12,5 | 10,1 | | | 22 |
| 4 | Polyethylen unbehandelt | 98,3 | 1,7 | - | - | - | - | 95 |
| | beschichtet | 77,7 | 12,7 | - | - | - | 9,6 | 25 |
| 5 | Polysulfon unbehandelt | 76,0 | 17,9 | 6,1 | - | - | - | 52 |
| | beschichtet | 69,3 | 30,7 | - | - | - | - | 18 |
| 6 | PVC unbehandelt | 69,9 | - | - | - | 30,1 | - | 89 |
| | beschichtet | 63,9 | 19,3 | - | - | - | 16,8 | 24 |

Man erkennt die erheblich kleineren Kontaktwinkel auf den hydrophilierten Flächen Die vergleichenden ESCA-Messungen zeigen eine vollständige, lückenlose Beschichtung mit dem jeweiligen Polymeren, die auch nach mehrtägigen Behandlungen mit n-Hexan/Ethanol unverändert blieb.

### Beispiele 7 bis 11

Auf den Beispielen 1 bis 6 analoge Weise wurden verschiedene polymere Substrate mit polymeren Schichten aus verschiedenen hydrophilen Monomeren überzogen. Die Polymeren, die Monomeren und die gemessenen Kontaktwinkel gehen aus der folgenden Tabelle 2 hervor.

**Tabelle 2**

| Bsp. | Polymer | hydrophiles Monomer | Kontaktwinkel | |
|---|---|---|---|---|
| | | | unbehandelt | beschichtet |
| 7 | Polypropylen | Polyethylenoxidmonoacrylat (MG 600) | 92 | 21 |
| 8 | Polystyrol | Vinylacetat | 93 | 27 |
| 9 | Polyurethan | Acrylsäure | 54 | 19 |
| 10 | Silicon | Diethylenglykol divinylether | 102 | 30 |
| 11 | Polyethylenterephthalat | acryloylierte Hydroxypropylcellulose | 71 | 22 |

## Patentansprüche

1. Verfahren zur Herstellung von hydrophilen Beschichtungen auf polymeren Substraten, dadurch gekennzeichnet, daß man mindestens ein hydrophiles Vinylmonomer strahleninduziert auf einer aktivierten Substratoberfläche pfropfpolymerisiert.

2. Verfahren nach Anspruch 1, dadurch gekennzeichnet, daß das hydrophile Vinylmonomere eine Löslichkeit in Wasser bei 20°C von mindestens 10 g/l hat.

3. Verfahren nach Anspruch 1 oder 2, dadurch gekennzeichnet, daß die Aktivierung des polymeren Substrats durch Einpolymerisieren eines Monomers mit UV-strahlungssensitiver Gruppe, durch UV-Strahlung, Hochfrequenz- oder Mikrowellenplasma, Korona-Behandlung. Elektronen- oder gamma-Strahlen, Beflammen und/oder Behandlung mit starken Säuren oder Basen erfolgt.

4. Verfahren nach Anspruch 1 oder 2, dadurch gekennzeichnet, daß die Aktivierung des polymeren Substrats durch UV-Strahlung im Wellenlängenbereich von 100 nm bis 400 nm erfolgt.

5. Verfahren nach Anspruch 1 oder 2, dadurch gekennzeichnet, daß die Aktivierung des polymeren Substrats durch Hochfrequenz- oder Mikrowellenplasma erfolgt.

6. Verfahren nach einem der Ansprüche 1 bis 5, dadurch gekennzeichnet, daß das hydrophile Vinylmonomere Acrylsäure oder ein Acrylsäurederivat, Methacrylsäure oder ein Methacrylsäurederivat, ein Carbonsäurevinylderivat, eine Vinylsulfonsäure oder ein Vinylsulfonsäuresalz, eine Alkenylarylsulfonsäure oder ein Alkenylarylsulfonsäuresalz, ein Vinylether, Vinylketon, Vinylamin, eine Polyalkylenoxyverbindung mit endständiger(n) Allyl-, Vinyl-, Acryl- oder Methacrylgruppe(n) oder ein funktionalisiertes Zuckerderivat mit Vinylgruppe(n) ist.

7. Verfahren nach einem der Ansprüche 1 bis 5, dadurch gekennzeichnet, daß 2-Hydroxyethylmethacrylat (HEMA) als hydrophiles Vinylmonomer verwendet wird.

8. Verfahren nach einem der Ansprüche 1 bis 7, dadurch gekennzeichnet, daß ein oder mehrere hydrophile Vinylmonomere verwendet werden und dementsprechend auf dem polymeren Substrat eine hydrophile Beschichtung aus einem Homo- oder einem Copolymerisat erzeugt wird.

9. Verfahren nach einem der Ansprüche 1 bis 8, dadurch gekennzeichnet, daß das polymere Substrat ein Polyolefin, Polyamid, Polyetherblockamid, Polysulfon, Polyvinylchlorid, Polystyrol, Polyurethan, Polyorganosiloxan, Polyester, Polycarbonat, Polyether. Polyethylen, Polypropylen, Polyisopren, Polytetrafluorethylen oder ein Gemisch aus solchen Polymeren ist.

10. Verfahren nach einem der Ansprüche 1 bis 9, dadurch gekennzeichnet, daß die aktivierten Oberflächen nach bekannten Methoden mit Lösungen des oder der Vinylmonomeren beschichtet werden.

11. Verfahren nach einem der Ansprüche, 1 bis 10, dadurch gekennzeichnet, daß die Pfropfpolymerisation oder -copolymerisation durch elektromagnetische Strahlen mit Wellenlängen von 250 bis 500 nm induziert wird.

12. Verfahren nach Anspruch 11, dadurch gekennzeichnet, daß das aktivierte Substrat in eine Lösung des oder der Vinylmonomeren eingetaucht und im getauchten Zustand bestrahlt wird.

13. Verfahren nach einem der Ansprüche 1 bis 12, dadurch gekennzeichnet, daß aus der erzeugten hydrophilen Beschichtung Restmonomere durch Extraktion mit Wasser und/oder einem organischen Lösungsmittel entfernt werden.

14. Gegenstand, gekennzeichnet durch eine nach dem Verfahren eines der Ansprüche 1 bis 13 beschichtete Oberfläche

15. Verwendung des Gegenstandes nach Anspruch 14 für technische. medizinische oder biotechnische Zwecke.
